## Europäisches Patentamt
## European Patent Office
## Office européen des brevets

(11) Numéro de publication: **0 115 992**
A1

# (12) DEMANDE DE BREVET EUROPEEN

(21) Numéro de dépôt: **84400191.7**

(22) Date de dépôt: **27.01.84**

(51) Int. Cl.³: **A 23 C 9/142**, C 13 K 5/00

(30) Priorité: **02.02.83 FR 8301614**

(43) Date de publication de la demande: **15.08.84**
**Bulletin 84/33**

(84) Etats contractants désignés: **DE FR GB NL**

(71) Demandeur: **LACTO SERUM FRANCE,
B.P. 64 Baleycourt, F-55102 Verdun (Meuse) (FR)**

(72) Inventeur: **Noel, Roland, 7, rue Serpenoise, F-57000 Metz
(FR)**

(74) Mandataire: **Chevallier, Robert Marie Georges, Cabinet
BOETTCHER 23, rue La Boétie, F-75008 Paris (FR)**

(54) **Procédé de traitement des saumures pour en extraire les produits nobles.**

(57) Procédé de traitement des saumures pour en extraire les produits nobles.

Le procédé consiste à recueillir la saumure issue de la déminéralisation par électrodialyse, à lui faire subir une ultrafiltration pour en séparer les protéines restantes, puis une désacidification à l'aide de résine anionique, enfin une opération d'osmose inverse qui en sépare le lactose restant.

EP 0 115 992 A1

Procédé de traitement des saumures pour en extraire 0115992
les produits nobles.

L'invention a pour objet un procédé qui permet
de traiter les saumures que l'on obtient fréquemment comme
sous-produits au cours de nombreux procédés de fabrication,
d'en retirer les produits nobles et de décomposer ces
saumures en produits réutilisables ou en produits non-
polluants comme l'eau que l'on peut éliminer sans inconvénient.

Par exemple, dans l'industrie laitière, on est
conduit en plusieurs circonstances à traiter un produit
pour en retirer les sels minéraux ou certains sels minéraux
considérés comme indésirables. On peut citer à cet égard :
la déminéralisation du sérum de caséinerie, la déminéralisation du lait, la déminéralisation des eaux-mères de lactose.

L'opération de déminéralisation s'effectue par
échange d'ions et aussi par électro-dialyse. L'électrodialyse fournit une saumure mais celle-ci, bien que fortement concentrée en sels, contient aussi un certain
pourcentage de produits nobles qui peuvent être réutilisés
comme des protéines et du lactose.

Une saumure d'électrodialyse contient par exemple
(sur la base de l'extrait sec) :

- sels minéraux     40 %
- protéines         20 %
- lactose           30 %
- divers            10 à 12 %

Jusqu'à présent, cette saumure est un déchet
indésirable, polluant, dont on se débarrasse au détriment
de l'environnement et qui est la cause d'une perte de
produits nobles. On constate que le rejet de la saumure
équivaut au rejet d'une quantité   de matière sèche dont
50 % sont des produits nobles.

Le but principal de l'invention est de récupérer
ces produits nobles qui sont perdus jusqu'à présent avec
la saumure.

0115992

Selon l'invention, on soumet le sérum de départ à une opération de décationisation de façon à obtenir un sérum acide, ayant un pH de 2,8 environ par exemple, de préférence inférieur à 3. Cette opération s'effectue par passage à travers un lit de résines cationiques qui remplacent les cations par des ions $H^+$.

L'électrodialyse donne la saumure d'électrodialyse dont la composition moyenne courante est mentionnée plus haut : elle est acide et elle contient encore des protéines et du lactose.

On soumet cette saumure acide à une opération d'ultrafiltration qui en sépare les protéines et qui procure un perméat acide contenant encore du lactose. On fait passer ce perméat acide sur des résines anioniques qui retiennent les anions et on recueille une solution aqueuse de lactose ; une opération d'osmose inverse permet de séparer le lactose que l'on renvoie dans le cycle de fabrication et l'eau que l'on renvoie, par exemple en tête de l'électrodialyseur.

On remarquera que l'opération d'ultrafiltration est remplaçable par toute autre opération équivalente que l'on jugerait utile d'employer et capable d'effectuer la séparation désirée des protéines, par exemple à partir d'un poids moléculaire supérieur à 5.000 comme la microfiltration, la chromatographie, etc.....

Le procédé de l'invention qui est décrit plus haut dans sa mise en oeuvre contient un enseignement plus général applicable à toutes saumures acides issues d'une opération d'ultrafiltration ou de tout traitement analogue donnant un perméat quelconque contenant encore des produits nobles en solution et des sels ionisés. Un traitement sur résines échangeuses d'ions appropriées élimine ces derniers et une opération subséquente d'osmose inverse sépare ces produits nobles. Ceci s'applique à toute saumure acide ou non, mais dans le cas du lactosérum, l'opération de désionisation qui précède l'opération d'osmose inverse est, selon l'invention, une désacidification en raison de l'intérêt et de l'avantage qu'apporte l'opération initiale de décationisation.

Cette dernière maintient pendant la plus grande partie du cycle de traitement une garantie contre la prolifération des bactéries et permet de parvenir à des produits utilisables en alimentation humaine. Plusieurs produits de laiterie du groupe comprenant le lait, le sérum de caséinerie, le lactosérum déprotéiné ou délactosé, devant subir une déminéralisation qui donne une saumure, sont justiciables, avantageusement, du procédé de l'invention décrit plus haut en détail.

REVENDICATIONS

0115992

1. Procédé de traitement de saumure contenant des produits nobles et des sels ionisables caractérisé en ce qu'on soumet cette saumure à une opération de désionisation à l'aide de résine échangeuse d'ions appropriée et on effectue sur la solution obtenue une opération d'osmose inverse qui en sépare les produits nobles.

2. Procédé selon la revendication 1 caractérisé en ce qu'on soumet la saumure à une opération d'ultrafiltration ou à une opération équivalente pour en retirer une partie des produits nobles avant les opérations de désionisation et d'osmose inverse.

3. Procédé selon la revendication 1 appliqué à des saumures acides caractérisé en ce qu'on effectue l'opération de désionisation à l'aide de résine anionique.

4. Procédé selon la revendication 2 appliqué à un produit de laiterie du groupe comprenant le lait, le sérum de caséinerie, le lactosérum déprotéiné ou délactosé, auquel on fait subir une opération de déminéralisation donnant une saumure qui contient des produits nobles, comme des protéines et du lactose, et des sels ionisables, caractérisé en ce qu'on soumet ce produit à une opération de décationisation préalablement à l'opération de déminéralisation après quoi on soumet la saumure acide obtenue à l'opération d'ultrafiltration pour en retirer les protéines puis à l'opération de désacidification à l'aide d'une résine anionique avant l'opération d'osmose inverse qui permet de recueillir le lactose.

5. Procédé selon la revendication 4 caractérisé en ce qu'on exécute l'opération de décationisation du produit jusqu'à lui donner un pH inférieur ou égal à 3.

## Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-2 044 771 (APV) <br> * Revendications 1,2,3,4,6; page 1, lignes 103-129 * | 1-5 | A 23 J 1/20 <br> A 23 C 9/142 <br> C 13 K 5/00 |
| | --- | | |
| Y | US-A-2 477 558 (E.F. ALMY et al.) <br> * Revendication 1; colonne 3 * | 1-4 | |
| | --- | | |
| Y | FR-A-2 493 851 (RECHERCHES ET APPLICATIONS INDUSTRIELLES D'ECHANGEURS D'IONS APPLEXION SA) <br> * Revendications 1,4,5; page 2, lignes 29-32 * | 1-4 | |
| | --- | | |
| Y | DEUTSCHE MILCHWIRTSCHAFT, vol. 16, 1971, Hildesheim, DE R.F. MADSEN: "Ultrafiltrierung und umgekehrte Osmose" * Page 728, figure 3 et colonne 2 * | 1-4 | DOMAINES TECHNIQUES RECHERCHES (Int. Cl. ³) |
| | ----- | | A 23 J <br> A 23 C |

Le présent rapport de recherche a été établi pour toutes les revendications

| Lieu de la recherche | Date d'achèvement de la recherche | Examinateur |
|---|---|---|
| LA HAYE | 11-05-1984 | PEETERS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82